# EUROPÄISCHE PATENTANMELDUNG

(11) **EP 3 219 978 A1**
(43) Veröffentlichungstag der Anmeldung: **20.09.2017**
(21) Anmeldenummer: 16000648.2
(22) Anmeldetag: 16.03.2016
(51) Int. Cl.: F03D 1/04, F03D 9/35, F03D 7/02

(54) **WINDKRAFTANLAGE ZUR STROMERZEUGUNG DURCH WINDENERGIE MIT UMLENKELEMENT**

(71) Anmelder: Burg, Horst Peter, 55469 Niederkumbd (DE)
(72) Erfinder: Burg, Horst Peter, Dr., 55469 Niederkumbd (DE)
(74) Vertreter: Hannke, Christian

(57) **Zusammenfassung**

Die Erfindung betrifft eine Windkraftanlage umfassend wenigstens einen um eine vertikale Rotationsachse drehbaren Rotor zum Umwandeln von Windenergie in Rotationsenergie mit einer Anzahl von um eine zur vertikalen Rotationsachse orthogonalen Schwenkachse schwenkbar angeordneten Rotorblättern sowie eine Anzahl an unterhalb der Rotorblätter angeordneten Windumlenkelementen, zum Umlenken eines im Wesentlichen horizontalen Windstroms in einen im Wesentlichen vertikalen, auf die Rotorblätter gerichteten Windstrom. Die Windkraftanlage weist dabei Mittel zum Einstellen wenigstens eines Neigungswinkels der Rotorblätter auf.

## Beschreibung

Die Erfindung betrifft eine Windkraftanlage nach dem Oberbegriff des Anspruchs 1 sowie nach dem Oberbegriff des Anspruchs 2.

Aus dem Stand der Technik sind Windkraftanlagen mit horizontalen und vertikalen Rotoren bekannt. Der Vorteil der Rotoren mit horizontaler Drehachse ist in der Regel eine hohe Effizienz, der Nachteil ist ein großer Platzbedarf. Es werden in der Regel hohe Masten benötigt. Windkraftanlagen mit horizontalen Rotoren sind in der Bevölkerung sehr umstritten. Als Nachteile werden von Kritikern Schattenwurf, Diskoeffekt, Hindernisbefeuerung, Windgeräusche, Landschaftsverschandelung und Tourismusbeeinflussung genannt. Die Entwicklung führt zu immer größeren Masten und steigenden Kosten. Auch Wartungskosten für Ersatzteile, Reparaturen sowie Servicearbeiten bringen sehr hohe Kosten mit sich und sind nur von großen Konzernen und Spezialfirmen sowie Spezialfachkräften zu bewältigen. Große Anlagen bringen größere Konstruktions- und Belastungsprobleme mit sich. Dadurch haben sie einen wesentlich größeren Raumbedarf und belasten mehr die Umwelt.

Horizontale Rotoren eignen sich eher weniger für die private Nutzung. Vertikale Rotoren, das heißt Rotoren mit vertikaler Drehachse sind vorteilhaft auch in kleineren Ausführungsformen nutzbar, weisen jedoch einen vergleichsweise geringen Wirkungsgrad auf. Da sich ein Teil der Rotorblätter immer gegen den Wind bewegen muss, weisen diese zudem im Vergleich zu horizontalen Anlagen einen aerodynamischen Nachteil auf. Dadurch kommt es mehr zu Hürden und ungleichmäßigen Belastungen als bei modernen horizontalen Achsen. Die bisherigen Vertikalläufer laufen schwer von selbst an und brauchen oftmals Fremdenergie zur Betriebsaufnahme.

Um Verluste bei vertikalen Anlagen zu minimieren, wird mit Einleitflächen und Ausleitflächen, wie beispielsweise in der Druckschrift DE 19957141 A1 dargestellt, gearbeitet. Ein anderer Lösungsansatz wie in der Offenlegungsschrift DE 10 2013 226 174 A1, beschreibt, dass Rotorblätter mit speziellen Formen ausgestattet sind, die je nach Orientierung einem Luftstrom eine größere oder kleinere Angriffsfläche bieten. Die Effektivitätssteigerung ist jedoch begrenzt.

Ein weiteres Problem bei Windkraftanlagen aus dem Stand der Technik ist die große Schallbelästigung, die insbesondere von horizontalen Windkraftanlagen ausgeht.

Es ist demnach eine Aufgabe der vorliegenden Erfindung eine Windkraftanlage mit effizienter Windkraftumsetzung bereitzustellen, welche auch in kleineren Maßstäben realisierbar ist.

Erfindungsgemäß ist eine Windkraftanlage gemäß einer ersten Ausführungsform vorgesehen, welche wenigstens einen um eine vertikale Rotationsachse drehbaren Rotor zum Umwandeln von Windenergie in Rotationsenergie mit einer Anzahl von um eine zur vertikalen Rotationsachse orthogonalen Schwenkachse schwenkbar angeordneten Rotorblättern sowie eine Anzahl an unterhalb der Rotorblätter angeordneten Windumlenkelementen, zum Umlenken eines im Wesentlichen horizontalen Windstroms in einen im Wesentlichen vertikalen, auf die Rotorblätter gerichteten Windstrom, aufweist. Hierfür sind Mittel zum Einstellen wenigstens eines Neigungswinkels der Rotorblätter angeordnet. Der richtige Neigungswinkel ist für Rotorblätter essentiell, da bei einem optimalen Neigungswinkel die Windenergie am effizientesten ausgenutzt wird. So ist es vorteilhaft, dass die Rotorblätter eines Rotors unter Windlast hart am Wind ausgerichtet sind, um möglichst viel Leistung aufzunehmen. Ohne Windlast hingegen muss der Neigungswinkel derart eingestellt werden, dass ein möglichst geringer Widerstand der Rotorblätter erzeugt wird. Demnach ist es vorteilhaft, Mittel zum Einstellen eines Neigungswinkels vorzusehen, da sich der Neigungswinkel der Rotorblätter auf der windzugewandten Seite (LUV-Seite) von dem Neigungswinkel auf der windabgewandten Seite (LEE-Seite) unterscheiden muss, da auf der windzugewandten Seite eine höhere Windlast vorliegt, als auf der windabgewandten Seite. Die Rotorblätter müssen demnach abhängig von der Windlast gedreht werden, damit auf der windzugewandten Seite ein optimaler Strömungswiderstand der Rotorblätter vorliegt und auf der windabgewandten Seite ein möglichst geringer Strömungswiderstand vorliegt.

Eine erfindungsgemäße Windkraftanlage kann gemäß einer zweiten Ausführungsform wenigstens einen um eine vertikale Rotationsachse drehbaren Rotor zum Umwandeln von Windenergie in Rotationsenergie mit einer Anzahl von Rotorblättern sowie eine Anzahl an unterhalb der Rotorblätter angeordneten Windumlenkelementen vorgeschlagen. Diese erfindungsgemäße Windkraftanlage weist wenigstens ein oberes Windumlenkelement zum Umlenken eines im Wesentlichen horizontalen Windstroms in einen im Wesentlichen vertikalen, auf einen äußeren Abschnitt der Rotorblätter gerichteten Windstrom sowie wenigstens ein unteres Windumlenkelement zum Umlenken eines im Wesentlichen horizontalen Windstroms in einen im Wesentlichen vertikalen, auf einen inneren Abschnitt der Rotorblätter gerichteten Windstrom auf. Die Anordnung von zumindest einem oberen Windumlenkelement und einem unteren Windumlenkelement ist vorteilhaft, da auf diese Weise sichergestellt ist, dass die Rotorblätter gleichmäßig von dem Windstrom überstrichen werden. Somit erhält man bei optimalem Neigungswinkel der Rotorblätter eine maximal mögliche Leistung. Bei nur einem Windumlenkelement bestünde die Möglichkeit, dass bevorzugt nur ein Abschnitt eines Rotorblattes mit einem Windstrom direkt beaufschlagt wird, was zu erheblichen Leistungseinbußen führen kann, da zum Beispiel beim ausschließlichen Anströmen eines mittleren oder hinteren Abschnitts des Rotorblattes die Antriebskraft zu gering sein kann, um den Rotor der Windkraftanlage in Bewegung zu versetzen.

Insbesondere kann eine erfindungsgemäße Windkraftanlage gemäß der ersten und der zweiten Ausführungsform ausgebildet sein.

Bevorzugt umfassen die Mittel zum Einstellen eine Gewichtsasymmetrie und/oder eine exzentrische Lagerung der Anzahl an Rotorblättern bezüglich der Schwenkachse, wobei ohne Einwirkung des Windstroms ein erster Neigungswinkel der Anzahl an Rotorblättern, bevorzugt von 0°, bezüglich der Schwenkachse einstellbar ist. Eine derartige Anordnung ist vorteilhaft, da sowohl bei Gewichtsasymmetrie als auch bei einer exzentrischen Lagerung der Rotorblätter, diese ohne Windlast rein durch die eigene Gewichtskraft einen Winkel bezüglich ihrer Schwenkachse aufweisen, welcher bevorzugt genau 0° oder zumindest beinahe 0° ist. Ein Winkel von 0° bedeutet in diesem Fall, dass die Rotorblätter in einer Normalenebene der Rotationsachse liegen. So ist sichergestellt, dass die Rotorblätter auf der windabgewandten Seite einen geringen Strömungswiderstand aufweisen und so die Rotationsbewegung des Rotors nicht abbremsen, was ebenfalls zur Leistungssteigerung beiträgt.

In einer weiteren bevorzugten Ausführung ist unter Einwirkung des Windstroms, bevorzugt ab einer einstellbaren Windstärke, ein zweiter Neigungswinkel der Anzahl an Rotorblättern in einem Bereich von 45°-75°, bevorzugt von 50°-70°, noch bevorzugter von 55°-65°, besonders bevorzugt von 60° einstellbar. Diese Winkelbereiche und vor allem ein Winkel von 60° sind insbesondere vorteilhaft, da dort die Windenergie am effizientesten ausgenutzt wird. In diesen Bereichen ist der Strömungswiderstand optimal. Weiterhin ist das Einstellen einer notwendigen Windstärke zum Auslösen der Verschwenkung der Rotorblätter vorteilhaft, da so die Windstärke festgelegt werden kann, ab welcher die Windkraftanlage durch den Windstrom antreibbar ist bzw. ab welcher Windstärke die Windkraftanlage effizient arbeitet.

Weiterhin ist bevorzugt eine Anzahl an Begrenzungsvorrichtungen zur Begrenzung des ersten und/oder zweiten Neigungswinkels der Rotorblätter vorgesehen. Eine derartige Begrenzungsvorrichtung ist vorteilhaft, damit sich die Rotorblätter ohne Windlast nicht über den Winkel von 0° wieder in den Wind drehen können und dass die Rotorblätter unter Windlast den Winkel von 60° bzw. von maximal 75° nicht überschreiten und den Winkel von 45° nicht unterschreiten. Eine derartige Begrenzungsvorrichtung kann beispielsweise als Schraube, Bolzen, oder etwas ähnlichem an einem Ende einer Lagereinrichtung ausgestaltet sein. Weiterhin ist ebenfalls eine Feder als Begrenzungsvorrichtung denkbar, deren Federkonstante derart ausgelegt ist, dass der Winkelbereich auf der windzugewandten Seite nicht über- bzw. unterschritten wird und welche derart angeordnet ist, dass das Rotorblatt auf der windabgewandten Seite bei einem Winkel von nahezu 0° gehalten wird.

In einer weiteren bevorzugten Ausführung ist eine mechanische und/oder elektrische Regelvorrichtung zur dynamischen Einstellung des ersten und/oder zweiten Neigungswinkels vorgesehen. Eine derartige Regelvorrichtung ist vorteilhaft, um sicherzustellen, dass auch bei geringeren Windgeschwindigkeiten eine optimale Winkeleinstellung gewährleistet ist. Ebenso kann durch eine solche Regelvorrichtung sichergestellt werden, dass die Rotorblätter auf der windabgewandten Seite zuverlässig einen Winkel von 0° einnehmen.

Bevorzugt ist zudem eine Anzahl an mittleren Windumlenkelementen zwischen dem oberen Windumlenkelement und dem unteren Windumlenkelement zum Umlenken eines im Wesentlichen horizontalen Windstroms in einen im Wesentlichen vertikalen, auf einen mittleren Abschnitt der Rotorblätter gerichteten Windstrom vorgesehen. Ein weiteres in der Mitte angeordnetes Windumlenkelement bietet den Vorteil, dass der Windstrom noch präziser auf die jeweiligen Bereiche der Rotorblätter gerichtet werden kann, um so sicherzustellen, dass die Rotorblätter noch homogener mit dem Windstrom überstrichen werden.

Weiterhin sind die Windumlenkelemente bevorzugt in einer ersten Richtung bezüglich einer Schnittebene durch eine zentrale Achse rund und/oder hyperbolisch und in einer zweiten Richtung gerade ausgebildet, wobei die zentrale Achse parallel zu der Rotationsachse angeordnet ist. Eine derartige Ausgestaltung der Windumlenkelemente trägt dazu bei, den Windstrom zu laminarisieren. Ein laminarer Windstrom ist vorteilhaft bei dem Antrieb der Rotorblätter, da starke Turbulenzen zu Leistungseinbußen führen.

Bevorzugt ist eine Anordnung der Windumlenkelemente drehbar um die Rotationsachse gelagert. Hierfür ist bevorzugt eine Einstellvorrichtung zur Ausrichtung der Anordnung der Windumlenkelemente vorgesehen, wobei die Anordnung derart an den im Wesentlichen horizontalen Windstrom ausrichtbar ist, dass der Windwiderstand maximal ist. Eine derartige Ausrichtung ist vorteilhaft, da so sichergestellt ist, dass die Rotorblätter mit der größtmöglichen Intensität des Windstroms beaufschlagt werden. Bei drehendem Wind kann ein Teil des Windstroms beispielsweise durch eine Verstrebung der Windkraftanlage abgebremst werden. Weiterhin können solche Hindernisse in dem Windstrom Turbulenzen verursachen, welche Effizienzeinbußen nach sich ziehen.

Weiterhin ist bevorzugt zumindest das obere Ende des oberen Windumlenkelements zwischen der Rotationsachse und einem äußeren Ende der Rotorblätter angeordnet. Vorzugsweise ist der Verlauf der oberen Windumlenkelemente und unteren Windumlenkelemente der seitlichen Querschnittsansicht zumindest abschnittsweise gleich. Insbesondere können die oberen und unteren Windumlenkelemente parallel zueinander angeordnet sein. Ferner können die Windumlenkelemente vorteilhafterweise so ausgestaltet werden, dass sie einen Luftstrom im Wesentlichen nur auf einen windzugewandten Abschnitt des Rotors und nicht auf einen windabgewandten Abschnitt des Rotors umlenken.

In einer weiteren bevorzugten Ausführungsform weist das obere Windumlenkelement einen Freilauf von 2% bis 3%, bevorzugt von 1,5% bis 2,5%, besonders bevorzugt von 1% bis 2% einer Gesamthöhe der Windkraftanlage auf. Der Freilauf ist in diesem Fall der Sicherheitsabstand, welcher nötig ist, damit die Rotorblätter auch bei starken Luftströmungen oder Eigenschwingungen der ausgelenkten Rotorblätter nicht mit den oberen Windumlenkelementen kollidieren. Dies hat zum Vorteil, Turbulenzen zu vermeiden und somit den abschnittsweisen Windstrom möglichst laminar zu machen, da auftretende Turbulenzen zu Effizienzverlusten bei der Wind-zu-Elektrizitätsübertragung führen können.

Zudem ist bevorzugt ein Überlastschutz zur Begrenzung einer Windlast auf die Rotorblätter vorgesehen. Dadurch wird verhindert, dass bei zu starker Belastung die Rotorblätter beschädigt werden. Durch diesen Überlastschutz können Reparatur- und Wartungsarbeiten minimiert werden, da die Wahrscheinlichkeit von Beschädigungen der Rotorblätter während des Betriebes minimiert wird.

Weiterhin ist die Anzahl an Windumlenkelementen bevorzugt gleichmäßig bezüglich der Rotationsachse des Rotors angeordnet. Eine gleichmäßige Anordnung ist vorteilhaft, da so auch bei wechselnden Anströmrichtungen des Windstroms die Funktionsweise der Windkraftanlage sichergestellt ist. Bei der gleichmäßigen Verteilung sind verschiedene geometrische Formen denkbar, wie zum Beispiel ein Drei-, Vier-, Fünf-, oder Sechseck. Prinzipiell sind alle Arten eines Vielecks mögliche Ausgestaltungsvarianten.

Bevorzugt weisen die Windumlenkelemente Riefen, Rillen und/oder Kerben zur Laminarisierung des Windstroms auf. Diese Vertiefungen sind über die gesamte Oberfläche des jeweiligen Windumlenkelements in regelmäßigen Abständen verteilt.

Zudem ist der Rotor bevorzugt von einer seitlichen Windführung umgeben, wobei eine obere Höhe bevorzugt größer ist als eine untere Höhe bezogen auf die Gesamthöhe der Windkraftanlage. Die seitliche Windführung ist dabei vorzugsweise derart optimiert, dass sie möglichst wenig Strömungsimpedanz aufweist und, aufgrund der Rückkopplung wegen des staudrucks oberhalb des Rotors, die Strömung unterhalb des Rotors möglichst laminar macht.

Im nachfolgenden wird eine besonders bevorzugte Ausführungsform beschrieben.

In dieser Ausführungsform umfasst die Windkraftanlage wenigstens einen Rotor zum Umwandeln von Windenergie in Rotationsenergie mit wenigstens zwei Rotorblättern.

Ein Kerngedanke der Ausführungsform ist, dass dem wenigstens einen Rotor wenigstens ein Windumlenkelement in einer Luftströmungsrichtung vorgeordnet ist, das eine Hauptströmungsrichtung eines einfallenden Windes um einen Winkel zwischen 60° und 120°, bevorzugt um einen Winkel zwischen 80° und 100° umlenkt. Durch das zusätzliche Windumlenkelement ist es vorteilhaft möglich, den wenigstens einen Rotor wie einen üblichen horizontalen Rotor zu konzipieren und ihn dennoch in einer vertikalen Achsanordnung zu positionieren. Durch das Windumlenkelement können horizontale Luft- oder Windströme in vertikale Auf- oder Abwinde umgewandelt werden, die dann von unten oder von oben auf den wenigstens einen Rotor treffen können.

In einer weiteren besonders vorteilhaften Ausführungsform lenkt das wenigstens eine Windumlenkelement einen im Wesentlichen horizontalen Luftstrom in einen im Wesentlichen vertikalen Luftstrom um. Selbstverständlich ist die Anordnung nicht darauf beschränkt, den Rotor mit einer vertikalen Achse auszustatten. Selbstverständlich ist es auch möglich, übliche vertikale Anordnungen um 90° zu drehen, sodass ihre üblicherweise vertikale Achse horizontal verläuft, sodass vertikale Auf- oder Abwinde dann orthogonal zur Rotorenachse auf den wenigstens einen Rotor treffen können.

Die entscheidende Idee ist, dass die Windkraftanlage ein Windumlenkelement aufweist. Dabei ist es denkbar, dass der wenigstens eine Rotor zusammen mit seiner Aufhängung an einem Gestell befestigt ist, das den wenigstens einen Rotor räumlich oberhalb oder unterhalb des wenigstens einen Windumlenkelementes positioniert und mit diesem verbindet. Anstelle eines Metallgestelles ist auch ein Gestell aus Kunststoff oder Holz denkbar. Denkbar sind auch Konstruktionen und Kompositionen aus verschiedenen Materialien.

Der Vorteil des Windumlenkelementes ist fernerhin, dass die Geräuschbelastung bei Aufwinden kleiner wird, da die Hauptschallachse nach oben geht. Denkbar ist, dass auf mehreren Haltestangen ein Ring befestigt ist, der in seinem Durchmesser größer ist als der Rotor. Vorteilhaft weist dieser Ring eine Querstrebe auf, an dessen Mittenbereich ein zugehöriger Stator angeordnet ist, an dem der Rotor dann rotierbar aufgehängt werden kann. Dies ist jedoch nicht beschränkt zu verstehen. So ist es auch möglich, dass ein Stator aus einer mittigen Säule besteht, die an einem unteren Bereich befestigt ist und mit dem Rotor rotierbar verbunden ist.

Sämtliche andere Anordnungen, die eine Positionierung des Rotors ober- oder unterhalb des Windumlenkelementes gestatten, sind ebenfalls denkbar. Vorteilhaft besteht das Windumlenkelement aus einem Blechmaterial, vorzugsweise Weißblech. Dies ist aus Korrosionsgründen besonders vorteilhaft. Denkbar sind jedoch auch verschiedene Kunststoffe oder Holz. Kunststoffe sind besonders leicht, jedoch nicht besonders widerstandsfähig. Auch Aluminiumbleche oder jede andere Metallblechvariante ist denkbar. Die Rotorblätter bestehen vorteilhaft aus einem Kunststoff. Vorteilhaft ist bei Kunststoff die Leichtigkeit, die jedoch Einbußen bei der Stabilität mit sich bringt. Für die Stabilität besonders vorteilhaft ist ein Holzmaterial, das jedoch aus anderen Gründen, wie z. B. der Witterungsbeständigkeit oder des Gewichtes, nachteilig sein könnte. Auch ein Verbundfasermaterial, wie z. B. Carbonfaser, ist denkbar.

Vorteilhaft ist eine Projektion der Fläche des wenigstens einen Windumlenkelementes auf eine horizontale Fläche in ihrer Fläche mindestens so groß wie eine Fläche des Rotors mit Rotorblättern. Dies ist vorteilhaft, da auf diese Weise eine besonders große Windstrommenge umgelenkt und auf den Rotor geführt werden kann. Dabei ist es möglich, dass das Windumlenkelement ebenfalls rotierbar ist, sodass eine Anpassung an die Windrichtung möglich ist. Denkbar ist jedoch auch, dass die Projektion der Fläche des wenigstens einen Windumlenkelements oder mehrerer Windumlenkelemente die Form eines Ringes aufweist, der besonders vorteilhaft eine größere Breite aufweist als ein Radius der Rotorblätter. Auch so kann eine besonders große Windstrommenge umgelenkt und auf den Rotor geführt werden. Vorteilhaft ist jedoch eine statische Anbringung des wenigstens einen Windumlenkelementes, da auf diese Weise auf eine Einstellung der Windrichtung verzichtet werden kann.

In einer besonders bevorzugten Ausführungsform weist das wenigstens eine Windumlenkelement wenigstens eine Platte auf, die in einem Winkel zwischen 25° und 65°, bevorzugt zwischen 35° und 55°, zur Vertikalen angeordnet ist. Durch eine bevorzugt ebene Platte wird ein im Wesentlichen paralleler Luftstrom in einen weiterhin im Wesentlichen parallelen Luftstrom umgelenkt. Auf diese Weise ist eine effektive und kompakte Bauweise möglich. Es ist jedoch auch denkbar das wenigstens eine Windumlenkelement in der Form eines Halbkreises, eines Parabols, hyperbelförmig oder in jeder anderen denkbaren Form auszubilden.

Durch eine konkave Form kann ein paralleler Luftstrom in einem zusammenlaufenden Luftstrom umgewandelt werden. Auf diese Weise kann der anfallende Luftstrom gezielt auf äußere Bereich der Rotorblätter gelenkt werden, um dort einen besonders starken Antrieb zu bewirken. Alternativ ist es auch möglich, dass wenigstens eine Windumlenkelement in seiner Fläche größer auszubilden als den Rotor selber, sodass ein größerer Flächenbereich eines anfallenden Luftstroms in einen kleineren Flächenbereich der Rotorfläche umgelenkt werden kann, sodass hier die Effektivität noch vergrößert werden kann. Nachteilig dabei ist, dass die Bauweise weniger kompakt wird. Weiterhin kann bei sehr starken Winden schnell eine Überlast erzielt werden, sodass hierfür erweiterte Regelungsmechanismen oder eine besonders robuste Bauweise notwendig werden. Für eine genau orthogonale Ablenkung des anfallenden Luftstroms ist es besonders vorteilhaft, wenn das Windumlenkelement in einem Winkel von 45° gegenüber der vertikalen Richtung angeordnet ist. Dabei bietet es sich an, dass das dem Wind zugewandte Ende mit einem Boden der Windkraftanlage bündig ist und zu der dem Wind abgewandten Seite hin nach oben Richtung Rotor verläuft.

In einer besonders vorteilhaften Ausführungsform sind senkrecht unterhalb oder oberhalb des wenigstens einen Rotors umlaufend um eine im Wesentlichen vertikale Achse 2 - 20, vorzugsweise 3 - 10, Windumlenkelemente angeordnet, um für jede horizontale Windrichtung ein Windumlenkelement zur Verfügung zu stellen. Dies ist als statische Variante besonders vorteilhaft, da auf diese Weise jede horizontale Windrichtung wenigstens ein Windumlenkblech trifft, durch das der einfallende Luftstrom teilweise um 90° in die vertikale Richtung umgelenkt wird. Dabei ist denkbar, dass seitlich zwischen den Windumlenkelementen Begrenzungsflächenelemente angeordnet sind, vorzugsweise als Plexiglasscheibe. Auf diese Weise wird bei den einzelnen Windumlenkelementen, wenn der Wind auf sie trifft, noch einmal ein Bündelungseffekt erzielt. Denkbar ist jedoch auch, dass die Windumlenkelemente zu einem großen Windumlenkelement miteinander verbunden sind, das vorteilhaft kegelstumpfförmig unterhalb des Rotors auseinander läuft, sodass vorteilhaft jede Windrichtung gleichberechtigt ist.

Die Windumlenkelemente betreffend ist es auch denkbar, dass zwei Reihen mit Umlenkelementen vertikal übereinander angeordnet sind. Vorteilhaft sind dabei die horizontal näher am Rotor angeordneten Windumlenkelemente weiter außen angeordnet, während die vom Rotor weiter beabstandeten Windumlenkelemente weiter innen angeordnet sind. Vorteilhaft wird ein Innenbereich der näher angeordneten Windumlenkelemente nicht von diesen ausgefüllt, sodass die Luft in zwei Ablenkreihen auf den Rotor gelenkt werden kann. Auch beliebig viele solcher übereinander Anordnungen von Windumlenkelementen sind denkbar. Besonders bevorzugt kann durch eine Experimentierreihe die Effektivität solcher Anordnungen optimiert werden.

In einer weiteren vorteilhaften Ausführungsform weist der wenigstens eine Rotor eine im Wesentlichen vertikale Rotationsachse auf. Dies ist vorteilhaft, da auf diese Weise ein Aufwind bzw. ein Abwind mit einer ähnlichen Effektivität wie bei einer horizontalen Anlage aus dem Stand der Technik in Rotationsenergie umgewandelt werden kann. Dies ist dies nicht darauf beschränkt. So ist auch denkbar, dass der wenigstens eine Rotor mit einer horizontalen Rotationsachse ausgestattet ist, auf die der umgelenkte Wind von unten bzw. von oben treffen kann.

In einer weiteren vorteilhaften Ausführungsform sind die Rotorblätter mit jeweils wenigstens zwei Lagereinrichtungen schwenkbar an dem Rotor angeordnet, um ein Verkippen der Rotorblätter je nach Bedarf zu ermöglichen. Dies ist besonders vorteilhaft, wenn mehrere Windumlenkelemente umlaufend um eine im Wesentlichen vertikale Achse angeordnet sind oder wenn ein umlaufendes Windumlenkelement in etwa kegelstumpfförmig ausgebildet ist. Denn auf diese Weise kann ein Luftstrom, der nur auf einen Kreisausschnitt des Rotors trifft, die Rotorblätter während einer Drehumrundung anheben und in eine Position für eine gute Kraftübertragung bringen.

Besonders vorteilhaft ist, wenn die Lagereinrichtungen eine im Wesentlichen horizontale Schwenkachse ausbilden, da auf diese Weise eine besonders effiziente Luftflächenveränderung möglich ist. Bei Kreisausschnittsflächen des Rotors, auf die kein Luftstrom fließt, wäre eine gekippte Position der Rotorblätter aufgrund des größeren Luftwiderstandes nachteilig. Dadurch, dass sich die Rotorblätter dort während einer Drehumrundung vorteilhaft wieder zurückdrehen oder zurückschwenken können, können die Rotorblätter den Bereich ohne Luftstrom vorteilhaft mit geringerem Luftwiderstand passieren.

Dabei ist es möglich, den Schwenkwinkel elektronisch anzusteuern und zu verändern. Vorteilhafter ist es jedoch, wenn die Kraft für das Verkippen aus dem Luftstrom selbst gewonnen werden kann, da auf diese Weise vorteilhaft ein größerer Regelmechanismus vermieden und eingespart werden kann. Als mögliche Materialien für die Rotorblätter wurden schon verschiedene Kompositionen aus Verbundmaterialien, Metallen oder Holz genannt. Vorteilhaft dabei ist bevorzugt ein Teil der Rotorblätter als Aluminiumstange ausgebildet, mit der die Rotorblätter in den Lagereinrichtungen gehalten werden.

Dies ist vorteilhaft, da Aluminium leicht und vergleichsweise robust ist. Weiterhin ist denkbar, dass am äußeren Ende der Stange, die bevorzugt aus Aluminium ausgebildet ist, eine Art Winkelelement angeordnet ist, das die Stange mit dem eigentlichen Rotorblatt verbindet. Dies ist jedoch nicht beschränkend zu verstehen. So ist es alternativ auch denkbar, den Bereich der Rotorblätter zylinderförmig zu ummanteln mit einer im Wesentlichen horizontalen Achse, sodass Seitenluftströme vermieden werden.

Vorteilhaft dabei ist, dass ein Aufwärtsluftstrom durch den Bernoulli-Effekt oben noch verstärkt werden kann, wenn Seitenwinde einen Unterdruck hervorrufen, der den Aufwärtswind verstärken kann. Nachteilig ist jedoch, dass dieser Bernulli-Effekt auch an der Unterseite auftreten kann und auf diese Weise einen Aufwärtsluftstrom wiederum bremsen kann. Dieser Effekt kann abgemildert werden, wenn an der Unterseite Luftführungselemente angebracht werden, die ein Schneiden des Seitenwindes vermeiden und so den Bernulli-Effekt an der Unterseite reduzieren können. Auf diese Weise kann erreicht werden, dass auch Bereiche des Rotors, die weniger von den Aufwinden erreicht werden, noch von einem geringen Aufwind erreicht werden, sodass selbst hier der Antrieb an geschwenkten Rotorblättern eine stärkere Wirkung aufweisen kann, wie deren Verminderung durch den erhöhten Luftwiderstand.

Aus dem Segelbereich sind Windstellungen von etwa 60° als optimierte Antriebswinkel bekannt. Jedoch lässt sich eine optimierte Rotorblattstellung experimentell optimieren. Dabei sind auch gewölbte Rotorblattformen aus dem Stand der Technik denkbar. Vorteilhaft sind die eigentlichen Rotorblätter an dem hervorstehenden Bereich des Winkelelementes mittels Nieten angeordnet. Dies ist jedoch nicht beschränkend zu verstehen.

Es sind oft verschiedene Klemm-, Schraub- oder Klebeverbindungen denkbar. Die Rotorblätter selber sind vorteilhaft aus Acrylglas, da dieses besonders leicht zu bearbeiten ist und eine vergleichbar geringe Masse aufweist. Vorteilhaft ist die Form der Rotorblätter flach ausgebildet und von ihrer Anbringung am Zentrum des Rotors nach außen in der seitlichen Ausdehnung erweiternd ausgebildet. Bei schwenkbaren Rotorblättern mit einem verbindenden Winkelelement zwischen Stange und eigentlichem Rotorblatt ist die Anordnung bevorzugt derart gehalten, dass ein Schwerpunkt der Verbindung von Winkelelement und eigentlichem Rotorelement etwas unterhalb des Mittelpunktes der Stange befindlich ist. Auf diese Weise wird vorteilhaft erreicht, dass ein Rotorblatt an einem Kreisausschnitt ohne Beaufschlagung mit einem Luftstrom während einer Drehumrundung immer in eine nahezu waagerechte Position des eigentlichen Rotorblattes zurückfällt. Auf diese Weise wird in der zurückgefallenen Position ein Luftwiderstand minimiert.

In einer weiteren vorteilhaften Ausführungsform weist der Rotor einen Innenbereich auf, der. aus wenigstens zwei ineinander liegenden Zylindermantelabschnitten mit unterschiedlichem Durchmesser zusammengesetzt ist, deren Achse im Wesentlichen in vertikaler Richtung angeordnet ist. Dies ist vorteilhaft, da sich Zylindermantelabschnitte sehr gut als Rotorbasis eignen. Wenn die beiden ineinander liegenden Zylindermantelabschnitte mit Stegen miteinander verbunden sind, kann eine verbesserte Stabilität erreicht werden. Besonders vorteilhaft werden als Basis für die Zylindermantelabschnitte Marleyrohre verwendet, die besonders bevorzugt bei dem kleineren Rohr zwischen 50 und 90 cm und bei dem größeren Rohr zwischen 120 und 180 cm Durchmesser ausgebildet sind. Anstatt Marleyrohren ist jedoch auch jede andere Materialkombination denkbar, die über ausreichend Stabilität verfügt, wie beispielsweise Holz, Metall, Kunststoff oder ein Verbundstoff bzw. eine Materialkomposition.

In einer weiteren besonders vorteilhaften Ausführungsform weisen die wenigstens zwei Zylindermantelabschnitte zu jedem Rotorblatt zwei auf einer bezüglich der Zylindermantelabschnitte radialen Achse befindliche Bohrungen auf, in denen sich die wenigstens zwei Lagereinrichtungen befinden, in denen die Rotorblätter schwenkbar angeordnet sind. Dieser Aufbau ist sehr vorteilhaft. Die Zylindermantelabschnitte bilden die Rohbasis für schwenkbare Rotorblätter. Diese sind bevorzugt an Aluminiumrohren befestigt, die in den Lagereinrichtungen der Zylindermantelabschnitte eingelassen sind, besonders bevorzugt mit einem Durchmesser zwischen 6 und 10 mm, ganz besonders bevorzugt 8 mm.

In einer weiteren vorteilhaften Ausführungsform ist ein Schwenkwinkel der Rotorblätter zur optimierten Antriebsübertragung begrenzt, bevorzugt durch eine Schraube, einen Bolzen oder etwas Ähnlichem an einem äußeren Rohrabschnitt. Dies ist besonders vorteilhaft, da eine Schraube, ein Bolzen oder etwas Ähnliches an einem äußeren Rohrabschnitt sehr einfach zu realisieren ist und dennoch sehr effektiv einen Schwenkwinkel begrenzen kann, wenn die Rotorblätter beim Schwenken gegen die Schraube stoßen, die an dem äußeren Zylindermantelabschnitt befestigt ist. Hierbei ist denkbar, dass das Schraubenloch ein Langloch ist, wodurch eine Position der Schraube verstellbar ist, sodass ein maximaler Schwenkwinkel veränderlich einstellbar ist. Dabei ist auch denkbar, dass durch eine weitere Schraube auch die Schwenkrichtung vorgegeben wird, sodass nur ein Schwenken in eine Richtung möglich ist.

In einer weiteren vorteilhaften Ausführungsform weist die Windkraftanlage einen Gleichstromgenerator zur Energieabnahme auf, der bevorzugt als Nebenschlussmachine, besonders bevorzugt mit einem Nebenschlussregler ausgestattet ist. Dabei ist der Gleichstromgenerator vorteilhaft selbsterregend ausgebildet, sodass kein Anfangsstrom notwendig ist, um eine Stromerzeugung in Gang zu setzen, ähnlich wie bei einem Dynamo. Eine Nebenschlussregulierung hilft dabei, bei stark veränderlichen Windgeschwindigkeiten eine Abnehmerleistung in einem begrenzten Rahmen zu halten. Nebenschlussschaltregler sind in verschiedenen Veröffentlichungen aus dem Stand der Technik bekannt, wie beispielsweise aus EP 1 486 845 D1.

Ebenfalls ist denkbar, einen Teil des Nebenschluss-Generators oder einen zweiten Generator ober- oder unterhalb auch als Wirbelstrom-Bremse zu nutzen.

Auch ein Bremssteuersystem ist denkbar, wie beispielsweise aus DE 10 2014 108 086 A1. Solche Bremssteuersysteme können dabei helfen, eine Überlast zu verhindern. Vorteilhaft hat der Rotor einen Durchmesser von zwischen 50 - 70 cm. Es sind jedoch auch andere Durchmesser denkbar. Ein besonderer Vorteil der erfindungsgemäßen Windkraftanlage ist, dass sie auch als Ersatz für Photovoltaikanlagen zur örtlichen Stromversorgung für eine dezentralisierte Energieversorgung denkbar sind. Sie lassen sich in kleinen handlichen Größen bauen und für Camping, für Jachten oder für eine Heimverwendung ohne große Masten realisieren. Sie sind auch in handlicher Größe leicht in einem Kleintransporter transportabel.

Bei sämtlichen Bestandteilen der Windkraftanlage ist es denkbar, dass diese aus glasdurchsichtiges Materialien, bevorzugt aus Acrylglas, ausgebildet sind. Dies ist vorteilhaft, da auf diese Weise ein optischer Eindruck der Windkraftanlege als weniger Störend empfunden wird.

Weiterhin wird in dieser Ausführungsform auch ein Verfahren zum Nutzen von Windenergie bereitgestellt, bei dem ein Luftstrom auf wenigstens einen Rotor zur Umwandlung von Arbeit trifft. Der Kerngedanke dieser Ausführungsform ist, dass der Luftstrom von einer im Wesentlichen horizontalen auf eine im Wesentlichen vertikale Richtung umgelenkt wird, bevor er auf den Rotor trifft. Die vorliegend beschriebene Windkraftanlage weist dabei ein Beispiel auf, mit was für einer Vorrichtung ein solches Verfahren realisiert werden kann. Der Vorteil liegt in einer durch den Umlenkvorgang veränderte Hauptschallachse und in der Flexibilität zur Bereitstellung von Rotoren, die durch ein zusätzliches Umlenkelement erkauft wird.

Erfindungsgemäße Windkraftanlagen können mit einer zusätzlichen Abdeckeinrichtung oberhalb des wenigstens einen Rotors und/oder einer den wenigstens einen Rotor seitlich umgebenden Windführung ausgestaltet sein. Zwischen der Abdeckeinrichtung und der seitlichen Windführung ist vorteilhafterweise eine Anzahl von Austrittsöffnungen zwischen dem wenigstens einen Rotor und der Abdeckeinrichtung zum Tragen eines Luftabstroms L_{ab} vorgesehen, wobei die Abdeckeinrichtung den wenigstens einen Rotor überdeckt. Bevorzugt ist die Abdeckeinrichtung wasserdicht und/oder insbesondere im ultravioletten Spektralbereich lichtdicht ausgestaltet. Im einfachsten Fall ist die Abdeckeinrichtung eine Platte, welche zumindest den Rotor von oben überdeckt. Eine erste Wirkung der Abdeckeinrichtung ist, dass der Rotor als einziges notwendigerweise bewegliches Teil der Windkraftanlage vor herabfallenden Gegenständen geschützt ist, so dass die Unfallgefahr und die Ausfallwahrscheinlichkeit der Windkraftanlage verringert werden. Zugleich wird dadurch die Betriebssicherheit erhöht, weil der prinzipiell verletzungsgefährdende Rotor für Menschen oder Tiere weniger zugänglich ist. Die Lebensdauer von Windkraftanlagen wird oft durch Ermüdungserscheinungen der Rotoren beschränkt. Das Material von Rotoren kann insbesondere aufgrund von Flüssigkeit wie zum Beispiel Regenwasser oder Kondenswasser benetzte oder durch UV-Einstrahlung korrodieren bzw. ermüden. Eine erfindungsgemäße Abdeckeinrichtung schützt die Rotoren davor und erhöht so die Lebensdauer und die Wartungsintervalle der Windkraftanlage. Beispielsweise kann die Abdeckeinrichtung über eine Anzahl von Stützen mit der Bodenplatte der Windkraftanlage verbunden sein. So ist die Windkraftanlage einfach und sicher transportierbar, weil das einzige sich notwendigerweise bewegliche Teil, der Rotor, von außen nur eingeschränkt zugänglich ist. In einer besonderen Ausgestaltung ist, beispielsweise durch höhenverstellbare Stützen, die Anzahl von Luftaustrittsöffnungen regulierbar. In einer ersten Stellung zur maximalen Windkraftumsetzung sind die Luftaustrittsöffnungen derart dimensioniert, dass sie im Wesentlichen keine Flussimpedanz (beispielsweise einen Verlust im Wirkungsgrad von unter 5 %) für den Luftstrom durch die Windkraftanlage darstellen. In einer zweiten Stellung zum besseren Transport kann der wirksame Querschnitt der Luftaustrittsöffnungen verringert oder sogar auf null reduziert werden, um ein Drehen des Rotors während des Transports der Windkraftanlage oder bei zu starker Windlast zu hemmen bzw. zu verhindern. In Zwischenpositionen kann die Flussimpedanz und damit der Windstrom geregelt werden. Im einfachsten Fall ist eine Regeleinrichtung der Luftaustrittsöffnungen durch mit einem regelbaren Elektromotor höhenverstellbare Stützen realisierbar.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbeziehung.

### Es zeigen:

- Fig. 1: eine schematische Darstellung einer erfindungsgemäßen Windkraftanlage;
- Fig. 2: eine schematische Darstellung einer erfindungsgemäßen Windkraftanlage mit Abdeckeinrichtung;
- Fig. 3: eine Draufsicht der erfindungsgemäßen Windkraftanlage;
- Fig. 4: eine Schnittdarstellung eines Ausschnitts der in Fig. 2 gezeigten Windkraftanlage;
- Fig. 5: ein Beispiel einer bevorzugten Ausführungsform einer Windkraftanlage;
- Fig. 6: ein schematisches Beispiel eines Rotors mit einem repräsentativen Rotorblatt;
- Fig. 7: eine Frontansicht eines Rotorblattes an einem Zylindermantelabschnitt;
- Fig. 8: eine weitere Frontansicht eines Rotorblattes an einem Zylindermantelabschnitt in geschwenktem Zustand;
- Fig. 9: eine schematische Seitenansicht eines Rotorblattes mit Winkelelement und Stange und
- Fig. 10: eine erfindungsgemäße Windkraftanlage mit Zylindermantelabschnitten, die den Rotor umschließen und von horizontalen Luftströmungen abschirmen.

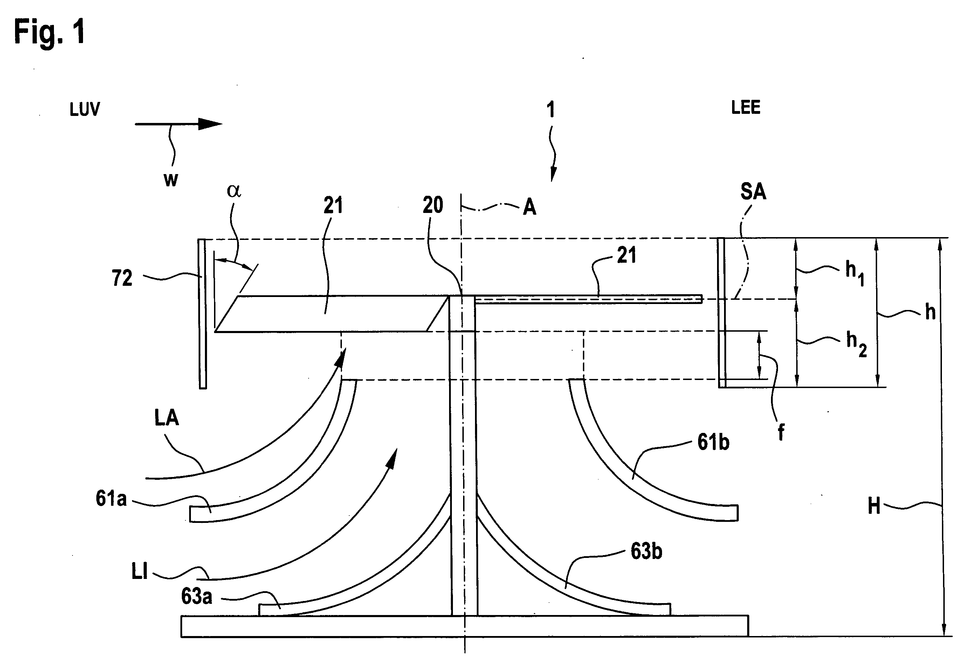

Fig. 1 zeigt eine schematische Darstellung einer erfindungsgemäßen Windkraftanlage 1. Bei der gezeigten Windkraftanlage sind jeweils zwei Rotorblätter 21 vorgesehen, welche an einem um eine vertikale Rotationsachse A drehbaren Rotor 20 angeordnet sind. Die Rotorblätter 21 sind dabei um eine Schwenkachse SA schwenkbar gelagert, wobei die Schwenkachse SA orthogonal zu der Rotationsachse A angeordnet ist. Unterhalb dieser Rotorblätter 21 sind jeweils obere Windumlenkelemente 61a, 61b sowie untere Windumlenkelemente 63a, 63b angeordnet. Das Bezugszeichen LA bezeichnet einen äußeren Luftstrom, welcher auf einen äußeren Abschnitt 21A des Rotorblattes 21 umgelenkt wird. Das Bezugszeichen LI bezeichnet einen inneren Luftstrom, welcher auf einen inneren Abschnitt 21I umgelenkt wird. Der Winkel α beschreibt den Neigungswinkel eines Rotorblattes 21 auf der windzugewandten Seite LUV. Das Bezugszeichen W kennzeichnet die Strömungsrichtung des Windes. LEE ist die windabgewandte Seite, an welcher ein Rotorblatt 21 eine Neigungswinkel α von 0° aufweist. Die gesamte Windkraftanlage weist eine Höhe H und die seitliche Windführung 72 weist eine Höhe h auf, zudem ist der obere Bereich der seitlichen Windführung 72 als h₁ gekennzeichnet, wobei diese Höhe h₁ der Abstand der Rotorblätter 21 zu der Oberseite der Windkraftanlage 1 ist. Die Höhe h2 ist der Abstand der Unterseite der seitlichen Windführung 72 zu der Höhe er Rotorblätter 21. Das Bezugszeichen f kennzeichnet den Freilauf, also den Sicherheitsabstand zwischen einem ausgelenkten Rotorblatt 21 und einem oberen Windumlenkelement 61a.

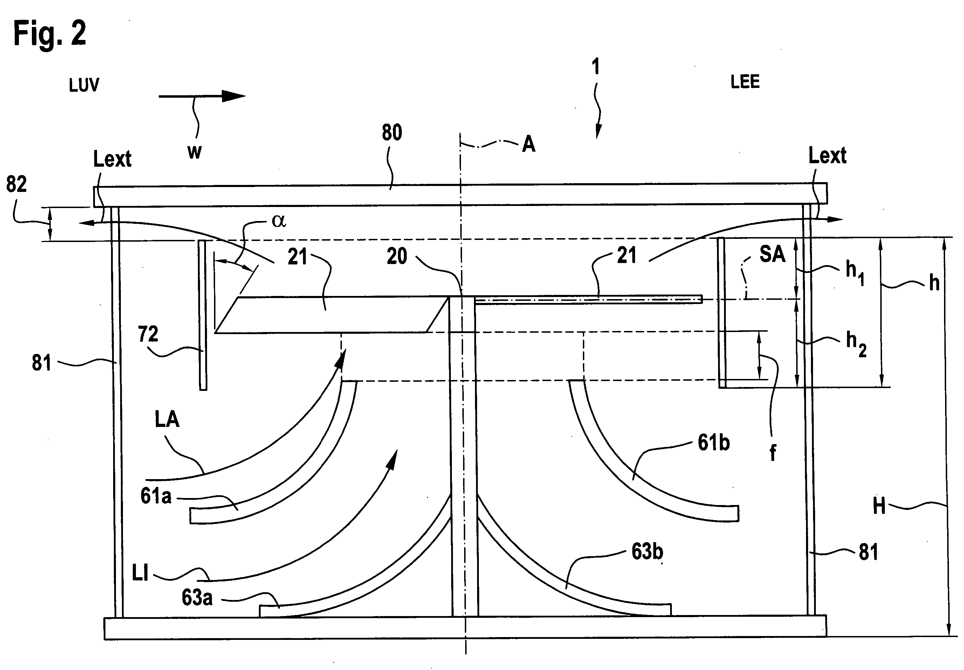

Fig. 2 zeigt eine erfindungsgemäße Windkraftanlage 1 in der beispielhaften Ausgestaltung gemäß Figur 1 mit einer zusätzlichen Abdeckeinrichtung 80 oberhalb des wenigstens einen Rotors 20 und/oder einer den wenigstens einen Rotor 20 seitlich umgebenden Windführung 72. Zwischen der Abdeckeinrichtung 80 und der seitlichen Windführung 72 ist eine Anzahl von Austrittsöffnungen 82 zwischen dem wenigstens einen Rotor 20 und der Abdeckeinrichtung 80 zum Tragen eines Luftabstroms Lab vorgesehen. Die Abdeckeinrichtung überdeckt den wenigstens einen Rotor 20. Bevorzugt ist die Abdeckeinrichtung 80 wasserdicht und/oder insbesondere im ultravioletten Spektralbereich lichtdicht ausgestaltet ist.

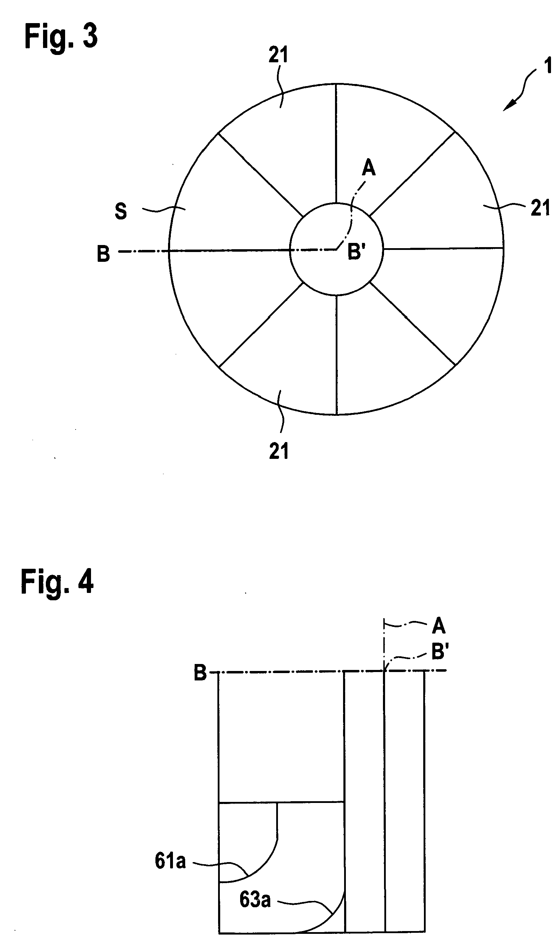

Fig. 3 zeigt eine Draufsicht der erfindungsgemäßen Windkraftanlage. Hierbei ist der gleichmäßige Aufbau der Windkraftanlage 1 erkennbar. Die Segmente S sind gleichmäßig um die Rotationsachse A verteilt. Weiterhin sind mehrere Rotorblätter 21 in der Darstellung erkennbar.

Fig. 4 ist eine Schnittdarstellung eines Ausschnitts der in Fig. 3 gezeigten Windkraftanlage 1 entlang der Schnittachse B-B'. Hierbei ist die teilweise runde bzw. hyperbolische Form der Windumlenkelemente 61 a, 63a besonders erkennbar.

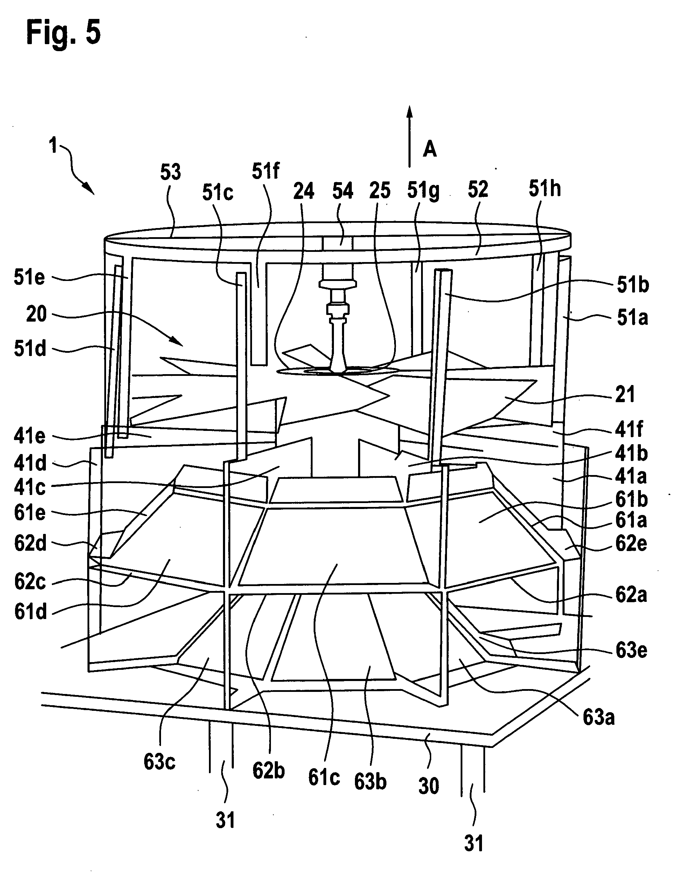

Fig. 5 zeigt eine Windkraftanlage 1, wobei senkrecht unterhalb eines Rotors 20 umlaufend um eine im Wesentlichen vertikale Achse A 16 Windumlenkelemente 61 a, 61 b, 61 c, 61 d, 61 e, 63 a, 63 b, 63 c, 63 d, 63 e (nicht alle mit Bezugszeichen versehen) angeordnet sind, aufgeteilt in zwei Reihen, die in Richtung der vertikalen Achse A über einander angeordnet sind. Dabei sind die oberen Windumlenkelemente 61 a, 61 b, 61 c, 61 d, 61 e weiter außen angeordnet, während die unteren Windumlenkelemente 63 a, 63 b, 63 c, 63 d, 63 e weiter innen angeordnet sind. Die oberen Windumlenkelemente 61 a, 61 b, 61 c, 61 d, 61 e weisen dabei an ihrer unteren Seite einen horizontalen Vorsprung 62 a, 62 b, 62 c, 62 d, 62 e auf, an dem ein einfallender Luftstrom geschnitten und aufgeteilt werden kann. Hier sind diese Vorsprünge 62 a, 62 b, 62 c, 62 d, 62 e als Plattenabschnitte dargestellt.

Denkbar sind jedoch auch stromlinienförmige, tropfenförmige Vorsprünge 62 a, 62 b, 62 c, 62 d, 62 e, um eine bessere Luftführung mit weniger Turbulenzenbildung zu produzieren. Es sind immer jeweils zwei Windumlenkelemente 61 a, 61 b, 61 c, 61 d, 61 e, 63 a, 63 b, 63 c, 63 d, 63 e übereinander angeordnet. Dies ist nicht beschränkend zu verstehen. Seitlich von den jeweils übereinander angeordneten Windumlenkelementen 61 a, 63 a, 61 b, 63 b, 61 c, 63 c, 61 d, 63 d, 61 e, 63 e sind seitliche Abschirmplatten 41 a, 41 b, 41 c, 41 d, 41 e, 41 f dargestellt, welche sich in radialer und vertikaler Richtung erstrecken. Diese dienen einer besseren Bündelung einfallender Windströme. Weiterhin dienen sie hier auch zur Stützung des Gestells. So sind oberhalb der seitlichen Abschirmplatten 41 a - f Stützstangen 51 a - h angebracht, die sich vertikal oberhalb der seitlichen Abschirmplatten 41 a - f erheben. Diese Stützstangen 51 a - h sind vorteilhaft aus Metall ausgebildet und bevorzugt mit Schrauben an den seitlichen Abschirmplatten 41 a - f befestigt. Diese Stützstangen 51 a - f sind hier nicht ganz am äußeren Rand der seitlichen Abschirmplatten 41 a - f angebracht, sondern leicht nach innen gerückt. Die seitlichen Abschirmplatten 41 a - f verlaufen nach innen bis zu einem äußeren Zylindermantelabschnitt 24. Auch der obere Rand eines inneren Zylindermantelabschnittes 25 ist dargestellt. Oberhalb des Rotors 20 erhebt sich in Richtung der vertikalen Achse A eine Statoraufhängung 54 mit Generator. Diese Statoraufhängung 54 ist an einer Querstange 53 befestigt, die oberhalb des Aufbaus an einem umlaufenden Ring 52 befestigt ist. Dieser umlaufende Ring 52 wird von den Stützstangen 41 a - f getragen. Radial von dem Rotor 20 nach außen gerichtet sind die eigentlichen Rotorblätter 21 angeordnet. Der gesamte Aufbau befindet sich auf einer Bodenplatte 30, die auf Stangen 31 getragen wird.

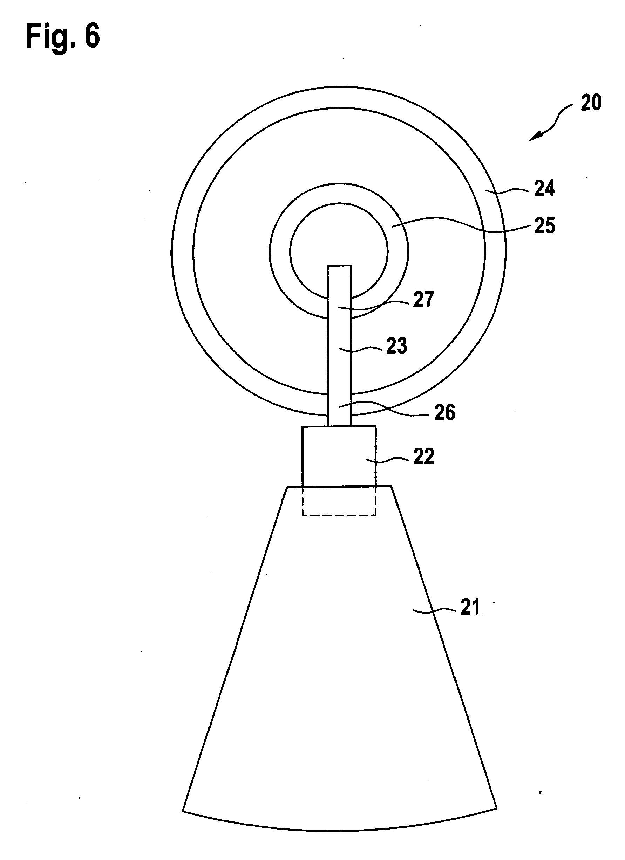

Fig. 6 zeigt schematisch den Aufbau eines Rotors 20. Dabei ist beispielhaft jedoch nur ein eigentliches Rotorblatt 21 dargestellt. Im Innenbereich weist der Rotor 20 einen inneren 25 und einen äußeren 24 Zylindermantelabschnitt auf, die hier aus der Vogelperspektive zu sehen sind. Für jedes Rotorblatt 21 befinden sich in einer radialen Achse befindliche Bohrungen in den Zylindermantelabschnitten 24,25, in denen Lagereinrichtungen 26, 27 angeordnet sind. Durch diese verläuft eine Stange 23, bevorzugt eine Aluminiumstange mit besonders bevorzugt 8 mm Durchmesser. Am äußeren Rand der Stange 23 ist ein Winkelelement 22 angeordnet, das bevorzugt zur Senkung eines Schwerpunktes des Rotorblattes 21 unter eine Höhe der Stange 23 dient. Am äußeren Rande dieses Winkelelementes 22 ist das eigentliche Rotorblatt 21 angeordnet.

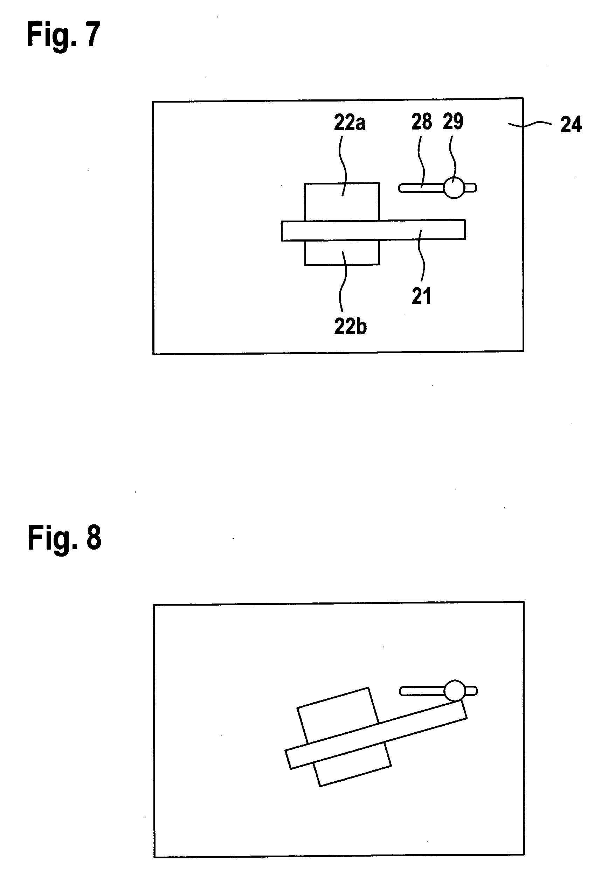

Fig. 7 zeigt eine Frontperspektive des eigentlichen Rotorblattes 21 an dem äußeren Zylindermantelabschnitt 24. Das Winkelelement 22 ist hier aufgeteilt in einen oberen Winkelabschnitt 22 a und einen unteren Winkelabschnitt 22 b. Der untere Winkelabschnitt 22 b ist hier unterhalb des eigentlichen Rotorblattes 21 befindlich, an dem und mit diesem vorteilhaft verbunden, während der obere Winkelabschnitt 22 a vorteilhaft hinter dem eigentlichen Rotorblatt 21 verläuft. Rechts oberhalb des eigentlichen Rotorblattes 21 ist ein Langloch 28 mit einer Schraube 29 zu sehen. Das Langloch 28 mit der Schraube 29 begrenzt vorteilhaft eine Schwenkbewegung des Rotorblattes 21.

Fig. 8 zeigt, wie sich das eigentliche Rotorblatt 21 beispielhaft in einer Schwenkbewegung mit dem Winkelelement 22 und dem oberen Winkelabschnitt 22 a und dem unteren Winkelabschnitt 22 b zusammen Richtung Schraube 29 bewegen kann.

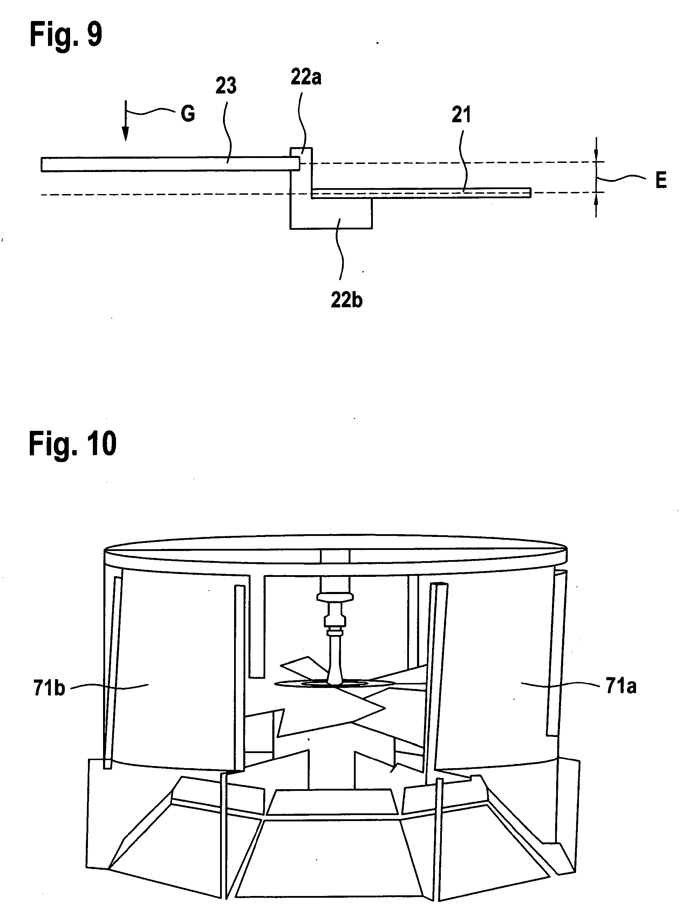

Fig. 9 zeigt eine schematische Seitenansicht einer Befestigung eines eigentlichen Rotorblattes 21 an einem Winkelelement 22 und einer Stange 23. Sichtbar ist, dass ein oberer Winkelabschnitt 22a am äußeren Ende der Stange 23 angeordnet ist. Der untere Winkelabschnitt 22b und das Rotorblatt 21 senken den Querschnitt den Schwerpunkt der Anordnung von Rotorblatt 21 und Winkelabschnitt 22 so, dass dieser in Richtung der Schwerkraft G um einen Versatz E unterhalb einer Achse der Stange 23 angeordnet ist. Alternativ könnte ein Gewicht (nicht dargestellt) unterhalb eines jeden Rotorblattes 21 angeordnet sein. Dadurch wird der Schwerpunkt des Rotorblattes unterhalb seiner Schwenkachse SA verlagert, sodass sich das Rotorblatt ohne Windbeauftragung in eine horizontale Stellung dreht. Anstatt der Gewichtskraft kann diese Rückstellkraft auch durch eine Federkraft, bewirkt beispielsweise durch eine zwischen dem Rotor und einem Rotorblatt angeordnete Feder (nicht dargestellt), bewirkt werden. Vorteilhaft ist das eigentliche Rotorblatt 21 oberhalb des unteren Winkelabschnittes 22 b, vorzugsweise durch Nieten, befestigt.

Fig. 10 zeigt eine weitere Ausführungsform der Windkraftanlage mit äußeren Zylindermantelelementen 71 a, 71 b, die den Rotor 20 um eine vertikale Achse A herum umschließen. Auf diese Weise wird vorteilhaft ein Seitenwind abgeschirmt. Es ist denkbar, dass diese äußeren Zylindermantelelemente 71 a, 71 b vollständig umlaufend ausgebildet sind.

### Bezugszeichenliste

- 1: Windkraftanlage
- 20: Rotor
- 21: eigentliches Rotorblatt
- 21A: äußerer Abschnitt
- 21I: Innerer Abschnitt
- 22: Winkelelement
- 22 a: oberer Winkelabschnitt
- 22 b: unterer Winkelabschnitt
- 23: Stange
- 24: äußerer Zylindermantelabschnitt
- 25: innerer Zylindermantelabschnitt
- 26: Lagereinrichtung
- 27: Lagereinrichtung
- 28: Langloch
- 29: Schraube
- 30: Bodenplatte
- 41 a - f: seitliche Abschirmplatten
- 51 a - f: Stützstangen
- 52: umlaufender Ring
- 53: Querstange
- 54: Statoraufhängung mit Generator
- 61 a - e: obere Windumlenkelemente
- 62 a - e: vorstehende Leitbleche
- 63 a - e: untere Windumlenkelemente
- 71 a - b: umschließende Zylindermantelelemente
- 72: seitliche Windführung
- A: vertikale Achse/ Rotationsachse
- E: Versatz
- G: Richtung der Schwerkraft
- SA: Schwenkachse
- LA: äußerer Luftstrom
- LI: innerer Luftstrom
- L_{ab}: Luftabstrom
- H: Gesamthöhe
- h: Höhe der seitlichen Windführung
- h₁: Höhe des oberen Abschnitts der seitlichen Windführung
- h₂: Höhe des unteren Abschnitts der seitlichen Windführung
- f: Freilauf
- α: Neigungswinkel
- B-B': Schnittachse

## Patentansprüche

1. Windkraftanlage (1) umfassend wenigstens einen um eine vertikale Rotationsachse (A) drehbaren Rotor (20) zum Umwandeln von Windenergie in Rotationsenergie mit einer Anzahl von um eine zur vertikalen Rotationsachse (A) orthogonalen Schwenkachse (SA) schwenkbar angeordneten Rotorblättern (21) sowie eine Anzahl an unterhalb der Rotorblätter (21) angeordneten Windumlenkelementen (61, 63), zum Umlenken eines im Wesentlichen horizontalen Windstroms in einen im Wesentlichen vertikalen, auf die Rotorblätter (21) gerichteten Windstrom,
**gekennzeichnet durch**
Mittel zur windlastabhängigen Einstellung wenigstens eines Neigungswinkels (α) der Rotorblätter (21).

2. Windkraftanlage (1) umfassend wenigstens einen um eine vertikale Rotationsachse (A) drehbaren Rotor (20) zum Umwandeln von Windenergie in Rotationsenergie mit einer Anzahl von Rotorblättern (21) sowie eine Anzahl an unterhalb der Rotorblätter (21) angeordneten Windumlenkelementen (61, 63),
**dadurch gekennzeichnet, dass**
wenigstens ein oberes Windumlenkelement (61a) zum Umlenken eines im Wesentlichen horizontalen Windstroms in einen im Wesentlichen vertikalen, auf einen äußeren Abschnitt (21A) der Rotorblätter (21) gerichteten Windstrom sowie wenigstens ein unteres Windumlenkelement (63a) zum Umlenken eines im Wesentlichen horizontalen Windstroms in einen im Wesentlichen vertikalen, auf einen inneren Abschnitt (21I) der Rotorblätter (21) gerichteten Windstrom.

3. Windkraftanlage (1) nach Anspruch 1,
**dadurch gekennzeichnet, dass**
die Mittel zum Einstellen eine Gewichtsasymmetrie und/oder eine exzentrische Lagerung der Anzahl an Rotorblättern (21) bezüglich der Schwenkachse (SA) umfassen, wobei ohne Einwirkung des Windstroms ein erster Neigungswinkel (α) der Anzahl an Rotorblättern (21), bevorzugt von 0°, bezüglich der Schwenkachse (SA) einstellbar ist.

4. Windkraftanlage (1) nach einem der Ansprüche 1 oder 3,
**dadurch gekennzeichnet, dass**
unter Einwirkung des Windstroms, bevorzugt ab einer einstellbaren Windstärke, ein zweiter Neigungswinkel (α) der Anzahl an Rotorblättern (21) in einem Bereich von 45°-75°, bevorzugt von 50°-70°, noch bevorzugter von 55°-65°, besonders bevorzugt von 60° einstellbar ist.

5. Windkraftanlage (1) nach einem der Ansprüche 1 oder 3-4,
**dadurch gekennzeichnet, dass**
eine Anzahl an Begrenzungsvorrichtungen (29) zur Begrenzung des ersten und/oder zweiten Neigungswinkels (α) der Rotorblätter (21) vorgesehen ist.

6. Windkraftanlage (1) nach einem der Ansprüche 1 oder 3-5,
**dadurch gekennzeichnet, dass**
eine mechanische und/oder elektrische Regelvorrichtung zur dynamischen Einstellung des ersten und/oder zweiten Neigungswinkels (α) vorgesehen ist.

7. Windkraftanlage (1) nach Anspruch 2,
**dadurch gekennzeichnet, dass**
eine Anzahl an mittleren Windumlenkelementen zwischen dem oberen Windumlenkelement (61a) und dem unteren Windumlenkelement (63a) zum Umlenken eines im Wesentlichen horizontalen Windstroms in einen im Wesentlichen vertikalen, auf einen mittleren Abschnitt der Rotorblätter (21) gerichteten Windstrom vorgesehen ist.

8. Windkraftanlage (1) nach einem der Ansprüche 2 oder 7,
**dadurch gekennzeichnet, dass**
die Windumlenkelemente (61, 63) in einer ersten Richtung bezüglich einer Schnittebene durch eine zentrale Achse rund und/oder hyperbolisch und in einer zweiten Richtung gerade ausgebildet sind, wobei die zentrale Achse parallel zu der Rotationsachse angeordnet ist.

9. Windkraftanlage (1) nach einem der Ansprüche 2 oder 7-8,
**dadurch gekennzeichnet, dass**
eine Anordnung der Windumlenkelemente (61, 63) drehbar um die Rotationsachse (A) gelagert ist.

10. Windkraftanlage (1) nach Anspruch 9,
**dadurch gekennzeichnet, dass**
eine Einstellvorrichtung zur Ausrichtung der Anordnung der Windumlenkelemente (61, 63) vorgesehen ist, wobei die Anordnung derart an den im Wesentlichen horizontalen Windstrom ausrichtbar ist, dass der Windwiderstand maximal ist.

11. Windkraftanlage (1) nach einem der Ansprüche 1 oder 7-10,
**dadurch gekennzeichnet, dass**
zumindest das obere Ende des oberen Windumlenkelements (61a) zwischen der Rotationsachse (A) und einem äußeren Ende (21A) der Rotorblätter (21) angeordnet ist.

12. Windkraftanlage (1) nach einem der Ansprüche 2 oder 7-11,
**dadurch gekennzeichnet, dass**
das obere Windumlenkelement (61 a) einen Freilauf (f) von 2% bis 3%, bevorzugt von 1,5% bis 2,5%, besonders bevorzugt von 1% bis 2% einer Gesamthöhe (H) der Windkraftanlage (1) aufweist.

13. Windkraftanlage (1) nach einem der vorangegangenen Ansprüche,
**dadurch gekennzeichnet, dass**
ein Überlastschutz zur Begrenzung einer Windlast auf die Rotorblätter (21) vorgesehen ist.

14. Windkraftanlage (1) nach einem der vorangegangenen Ansprüche,
**dadurch gekennzeichnet, dass**
die Anzahl an Windumlenkelementen (61, 63) gleichmäßig bezüglich der Rotationsachse (A) des Rotors (20) angeordnet ist.

15. Windkraftanlage (1) nach einem der vorangegangenen Ansprüche,
**dadurch gekennzeichnet, dass**
die Windumlenkelemente (61, 63) Riefen, Rillen und/oder Kerben zur Laminarisierung des Windstroms aufweisen.

16. Windkraftanlage (1) nach einem der vorangegangenen Ansprüche,
**dadurch gekennzeichnet, dass**
der Rotor (20) von einer seitlichen Windführung (72) umgeben ist, wobei eine obere Höhe (h₁) bevorzugt größer ist als eine untere Höhe (h₂) bezogen auf die Gesamthöhe (H) der Windkraftanlage (1).

17. Windkraftanlage (1) nach einem der vorangegangenen Ansprüche,
**dadurch gekennzeichnet, dass**
eine Abdeckeinrichtung (80) oberhalb des wenigstens einen Rotors (20) und/oder einer den wenigstens einen Rotor (20) seitlich umgebenden Windführung (72) vorgesehen ist, wobei zwischen der Abdeckeinrichtung (80) und der seitlichen Windführung (72) eine Anzahl von Austrittsöffnungen (82) zwischen dem wenigstens einen Rotor (20) und der Abdeckeinrichtung (80) zum Tragen eines Luftabstroms (L_{ab}) vorgesehen ist, wobei die Abdeckeinrichtung (80) den wenigstens einen Rotor (20) überdeckt, und wobei bevorzugt die Abdeckeinrichtung (80) wasserdicht und/oder, insbesondere im ultravioletten Spektralbereich, lichtdicht ausgestaltet ist.

## Geänderte Patentansprüche

### Geänderte Patentansprüche gemäss Regel 137(2) EPÜ.

1. Windkraftanlage (1) umfassend wenigstens einen um eine vertikale Rotationsachse (A) drehbaren Rotor (20) zum Umwandeln von Windenergie in Rotationsenergie mit einer Anzahl von um eine zur vertikalen Rotationsachse (A) orthogonalen Schwenkachse (SA) schwenkbar angeordneten Rotorblättern (21), eine Anzahl an unterhalb der Rotorblätter (21) angeordneten Windumlenkelementen (61, 63), zum Umlenken eines im Wesentlichen horizontalen Windstroms in einen im Wesentlichen vertikalen, auf die Rotorblätter (21) gerichteten Windstrom, sowie Mitteln zur windlastabhängigen Einstellung wenigstens eines Neigungswinkels (α) der Rotorblätter (21), **dadurch gekennzeichnet, dass**
die Mittel zum Einstellen eine Gewichtsasymmetrie der Anzahl an Rotorblättern (21) bezüglich der Schwenkachse (SA) umfassen, wobei ohne Einwirkung des Windstroms ein erster Neigungswinkel (α) der Anzahl an Rotorblättern (21) bezüglich der Schwenkachse (SA) einstellbar ist.

2. Windkraftanlage (1) nach Anspruch 1,
**gekennzeichnet durch**
wenigstens ein oberes Windumlenkelement (61a) zum Umlenken eines im Wesentlichen horizontalen Windstroms in einen im Wesentlichen vertikalen, auf einen äußeren Abschnitt (21A) der Rotorblätter (21) gerichteten Windstrom sowie wenigstens ein unteres Windumlenkelement (63a) zum Umlenken eines im Wesentlichen horizontalen Windstroms in einen im Wesentlichen vertikalen, auf einen inneren Abschnitt (211) der Rotorblätter (21) gerichteten Windstrom.

3. Windkraftanlage (1) nach Anspruch 1,
**dadurch gekennzeichnet, dass**
ohne Einwirkung des Windstroms ein erster Neigungswinkel (α) der Anzahl an Rotorblättern (21) von 0° bezüglich der Schwenkachse (SA) einstellbar ist.

4. Windkraftanlage (1) nach einem der Ansprüche 1 oder 3,
**dadurch gekennzeichnet, dass**
unter Einwirkung des Windstroms, bevorzugt ab einer einstellbaren Windstärke, ein zweiter Neigungswinkel (α) der Anzahl an Rotorblättern (21) in einem Bereich von 45°-75°, bevorzugt von 50°-70°, noch bevorzugter von 55°-65°, besonders bevorzugt von 60° einstellbar ist.

5. Windkraftanlage (1) nach einem der Ansprüche 1 oder 3-4,
**dadurch gekennzeichnet, dass**
eine Anzahl an Begrenzungsvorrichtungen (29) zur Begrenzung des ersten und/oder zweiten Neigungswinkels (α) der Rotorblätter (21) vorgesehen ist.

6. Windkraftanlage (1) nach einem der Ansprüche 1 oder 3-5,
**dadurch gekennzeichnet, dass**
eine mechanische und/oder elektrische Regelvorrichtung zur dynamischen Einstellung des ersten und/oder zweiten Neigungswinkels (α) vorgesehen ist.

7. Windkraftanlage (1) nach Anspruch 2,
**dadurch gekennzeichnet, dass**
eine Anzahl an mittleren Windumlenkelementen zwischen dem oberen Windumlenkelement (61a) und dem unteren Windumlenkelement (63a) zum Umlenken eines im Wesentlichen horizontalen Windstroms in einen im Wesentlichen vertikalen, auf einen mittleren Abschnitt der Rotorblätter (21) gerichteten Windstrom vorgesehen ist.

8. Windkraftanlage (1) nach einem der Ansprüche 2 oder 7,
**dadurch gekennzeichnet, dass**
die Windumlenkelemente (61, 63) in einer ersten Richtung bezüglich einer Schnittebene durch eine zentrale Achse rund und/oder hyperbolisch und in einer zweiten Richtung gerade ausgebildet sind, wobei die zentrale Achse parallel zu der Rotationsachse angeordnet ist.

9. Windkraftanlage (1) nach einem der Ansprüche 2 oder 7-8,
**dadurch gekennzeichnet, dass**
eine Anordnung der Windumlenkelemente (61, 63) drehbar um die Rotationsachse (A) gelagert ist.

10. Windkraftanlage (1) nach Anspruch 9,
**dadurch gekennzeichnet, dass**
eine Einstellvorrichtung zur Ausrichtung der Anordnung der Windumlenkelemente (61, 63) vorgesehen ist, wobei die Anordnung derart an den im Wesentlichen horizontalen Windstrom ausrichtbar ist, dass der Windwiderstand maximal ist.

11. Windkraftanlage (1) nach einem der Ansprüche 2 oder 7-10,
**dadurch gekennzeichnet, dass**
zumindest das obere Ende des oberen Windumlenkelements (61a) zwischen der Rotationsachse (A) und einem äußeren Ende (21A) der Rotorblätter (21) angeordnet ist.

12. Windkraftanlage (1) nach einem der Ansprüche 2 oder 7-11,
**dadurch gekennzeichnet, dass**
das obere Windumlenkelement (61a) einen Freilauf (f) von 2% bis 3%, bevorzugt von 1,5% bis 2,5%, besonders bevorzugt von 1% bis 2% einer Gesamthöhe (H) der Windkraftanlage (1) aufweist.

13. Windkraftanlage (1) nach einem der vorangegangenen Ansprüche,
**dadurch gekennzeichnet, dass**
ein Überlastschutz zur Begrenzung einer Windlast auf die Rotorblätter (21) vorgesehen ist.

14. Windkraftanlage (1) nach einem der vorangegangenen Ansprüche,
**dadurch gekennzeichnet, dass**
die Anzahl an Windumlenkelementen (61, 63) gleichmäßig bezüglich der Rotationsachse (A) des Rotors (20) angeordnet ist.

15. Windkraftanlage (1) nach einem der vorangegangenen Ansprüche,
**dadurch gekennzeichnet, dass**
die Windumlenkelemente (61, 63) Riefen, Rillen und/oder Kerben zur Laminarisierung des Windstroms aufweisen.

16. Windkraftanlage (1) nach einem der vorangegangenen Ansprüche,
**dadurch gekennzeichnet, dass**
der Rotor (20) von einer seitlichen Windführung (72) umgeben ist, wobei eine obere Höhe (h₁) bevorzugt größer ist als eine untere Höhe (h₂) bezogen auf die Gesamthöhe (H) der Windkraftanlage (1).

17. Windkraftanlage (1) nach einem der vorangegangenen Ansprüche,
**dadurch gekennzeichnet, dass**
eine Abdeckeinrichtung (80) oberhalb des wenigstens einen Rotors (20) und/oder einer den wenigstens einen Rotor (20) seitlich umgebenden Windführung (72) vorgesehen ist, wobei zwischen der Abdeckeinrichtung (80) und der seitlichen Windführung (72) eine Anzahl von Austrittsöffnungen (82) zwischen dem wenigstens einen Rotor (20) und der Abdeckeinrichtung (80) zum Tragen eines Luftabstroms (L_{ab}) vorgesehen ist, wobei die Abdeckeinrichtung (80) den wenigstens einen Rotor (20) überdeckt, und wobei bevorzugt die Abdeckeinrichtung (80) wasserdicht und/oder, insbesondere im ultravioletten Spektralbereich, lichtdicht ausgestaltet ist.
